# EUROPÄISCHE PATENTSCHRIFT

(11) **EP 0 971 510 B1**
(45) Veröffentlichungstag und Bekanntmachung des Hinweises auf die Patenterteilung: **13.02.2002**
(21) Anmeldenummer: 99112572.5
(22) Anmeldetag: 01.07.1999
(51) Int. Cl.: H04L 12/56, H04Q 3/00

(54) **Verfahren und Anordnung zur Behandlung eines Paketdatendienstes**
Method and device for handling packet data service
Procédé et dispositif pour le traitement de service de données en paquets

(30) Priorität: 06.07.1998 DE 19830164; 27.10.1998 DE 19849541
(43) Veröffentlichungstag der Anmeldung: 12.01.2000
(73) Patentinhaber: SIEMENS AKTIENGESELLSCHAFT, 80333 München (DE)
(72) Erfinder: Kreppel, Jan, 82377 Penzberg (DE)

(56) Entgegenhaltungen:
- EP-A- 0 714 214
- WO-A-97/09814
- WO-A-97/26739
- US-A- 5 457 736
- US-A- 5 727 058
- HIDEO TAKAMURA ET AL: "NETWORK AND SIGNALING STRUCTURE BASED ON PERSONAL DIGITAL CELLULAR TELECOMMUNICATION SYSTEM CONCEPT" PERSONAL COMMUNICATION - FREEDOM THROUGH WIRELESS TECHNOLOGY, SECAUCUS, NJ., MAY 18 - 20, 1993, Nr. CONF. 43, 18. Mai 1993 (1993-05-18), Seiten 922-926, XP000393331 INSTITUTE OF ELECTRICAL AND ELECTRONICS ENGINEERS ISBN: 0-7803-1267-8

## Beschreibung

Die Erfindung betrifft ein Verfahren und eine Anordnung zur Behandlung eines Paketdatendienstes gemäß dem Oberbegriff des Patentanspruchs 1 bzw. des Patentanspruchs 14.

Für verbindungsorientierte Kommunikationsdienste in einem Kommunikationsnetz ist es bekanntlich möglich, eine Steuerung der Verbindung durch ein Intelligentes Netz (IN) durchführen zu lassen. So ist beispielsweise für Mobilfunknetze nach dem GSM-Standard (Global System for Mobile Communication) eine CAMEL-Plattform (Customized Applications for Mobile network Enhanced Logic) gemäß der GSM-Empfehlung 03.78, definiert, um eine weltweite Nutzung der Leistungsmerkmale des Intelligenten Netzes zu ermöglichen. Die übliche Architektur des Intelligenten Netzes sieht eine Dienstevermittlungsfunktion (Service Switching Function) und eine Dienstesteuerungsfunktion (Service Control Function) vor, die über eine Signalisierungsstrecke miteinander verbunden sind. Als Applikation wird hierbei ein spezielles Protokoll verwendet, das für das Mobilfunknetz aus dem CAP-Protokoll (CAMEL Application Part) besteht.

In Mobilfunknetzen nach dem GSM-Standard werden derzeit neuartige Datendienste wie der Paketdatendienst GPRS (General Packet Radio Service) gemäß der GSM-Empfehlung 03.60, eingeführt. Die Übertragung im Mobilfunknetz findet hierbei nicht verbindungsorientiert, sondern in Form von Paketdaten statt. Diese Art der Übertragung nutzt die gegebenen Übertragungsressourcen im Mobilfunknetz besser aus. Für Mobilfunknetze der nächsten Generation (UMTS, Universal Mobile Telecommunication Systems) werden ebenfalls paketorientierte Transportdienste favorisiert. Bei verbindungsorientierten Diensten kann - dies ist allgemein bekannt - die Dauer der Verbindung gemessen und die Vergebührung der Verbindung nach dem jeweiligen aktuellen Tarif - beispielsweise unter Nutzung eines IN-Dienstes - durchgeführt werden. Bei paketorientierten Diensten, die Paketdatenströme bewältigen, ist es nicht sinnvoll, zur Vergebührung eine Nachricht pro Paket zwischen Paketdatenentz und Intelligentem Netz zu übertragen, da dies zu einer erheblichen Signalisierungslast führen würde.

Die WO97/26739 offenbart in einem paketvermittelten Mobilkommunikations-Netzwerk durch spezielle Gebührenberechnungsunterstützungsknoten (Billing Gateway Support Node BGGSN) Gebühreninformationen einzusammeln und an ein Gebührenberechnungszentrum zu übermitteln, wobei die Bestimmung von Verkehrsgebühren jeweils aufgrund einer Zählung der Bytes oder statistischer Methoden betreffend den Datenverkehr erfolgt.

Die WO97/09814 offenbart ein Verfahren zu Steuerung von Verkehrsstau in einem intelligenten Netz.

Es ist Aufgabe der vorliegenden Erfindung, ein Verfahren und ein Mobilfunknetz anzugeben, durch das der Paketdatenstrom bei der Behandlung eines paketorientierten Dienstes mittels eines Intelligenten Netzes mengenmäßig überwacht werden kann.

Diese Aufgabe wird gemäß der Erfindung hinsichtlich des Verfahrens durch die Merkmale des Patentanspruchs 1 und hinsichtlich des Mobilfunknetzes durch die Merkmale des Patentanspruchs 13 gelöst. Weiterbildungen der Erfindung sind den Unteransprüchen zu entnehmen.

Ausgehend von der Behandlung eines Paketdatendienstes durch einen Dienstenetzknoten eines Paketdatennetzes, mit dem Kommunikationsendgeräte zur Übertragung von Paketdaten verbunden sind, erfolgt erfindungsgemäß
- ein Interworking des Paketdatendienstes mit Netzfunktionen eines Intelligenten Netzes, von denen eine Dienstevermittlungsfunktion mit dem Dienstenetzknoten zusammengeschaltet und eine Dienstesteuerungsfunktion an den Dienstenetzknoten mit integrierter Dienstevermittlungsfunktion angeschaltet wird, und
- zur Überwachung eines Paketdatenstromes im Paketdatennetz das Setzen zumindest eines Schwellwerts für die Paketdatenübertragung von der Dienstesteuerungsfunktion, die diesen Schwellwert an die Dienstevermittlungsfunktion übermittelt.

Erst durch die Kombination von
- Integration der Dienstevermittlungsfunktion in den jeweiligen Dienstenetzknoten,
- Kommunikation mit der Dienstesteuerungsfunktion,
- Setzen eines Schwellwerts,
läßt sich in vorteilhafter Weise der Paketdatendienst wie andere IN-Dienste behandeln und steuern sowie der Paketdatenstrom gemäß dem paketorientierten Dienst über die Intelligenten Netzfunktionen einfach und wirtschaftlich überwachen. Der Signalisierungsaufwand wird auf ein Minimum reduziert, da von der IN-Steuerungsfunktion nur der Schwellwert für die aufeinanderfolgende Übertragung einer Vielzahl von Paketen gesetzt und mitgeteilt werden muss. Von der IN-Vermittlungsfunktion wird auf das Erreichen bzw. Überschreiten dieses Schwellwerts gewartet, und erst danach werden Signalisierungsnachrichten für das weitere Vorgehen ausgetauscht.

Die Erfindung wird anhand eines in der Zeichnung dargestellten Ausführungsbeispiels näher erläutert. Im einzelnen zeigen
- FIG 1: Netzeinrichtungen eines Paketdatennetzes und eines Intelligenten Netzes zur Behandlung eines Paketdatendienstes gemäß der Erfindung, und
- FIG 2: den Nachrichtenfluß für ein Interworking zwischen den Netzeinrichtungen zur Überwachung von Paketdatenströmen.

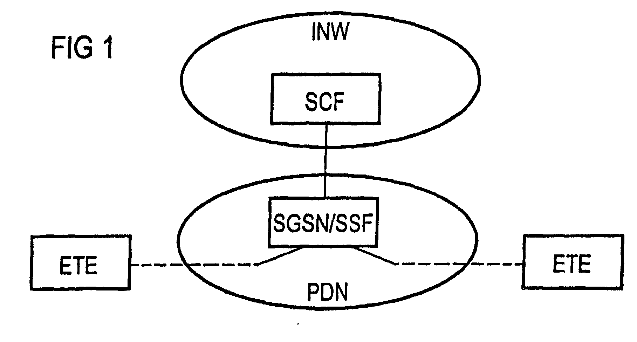

FIG 1 zeigt in einem Blockschaltbild die Netzeinrichtungen eines Paketdatennetzes PDN und eines Intelligenten Netzes INW für die Behandlung eines Paketdatendienstes, bei der gemäß der Erfindung Schwellwerte für die Überwachung von Paketdatenströmen eingestellt werden. Dabei sind nur die für die Erfindung maßgebenden Netzeinrichtungen der jeweiligen Kommunikationsnetze dargestellt. Beispielhafte Anwendungen der Erfindung betreffen das Interworking des Paketdatendienstes GPRS (General Packet Radio Service) - in einem Mobilfunknetz gemäß dem GSM-Standard - mit Intelligenten Netzfunktionen oder das Interworking eines paketorientierten Dienstes - in einem Mobilfunknetz gemäß UMTS (Universal Mobile Telecommunication Systems) - mit Intelligenten Netzfunktionen.

Im Paketdatennetz PDN erfolgt die Paketübertragung in einem entsprechenden Netzknoten paketorientiert, wobei eine Dienstevermittlungsfunktion SSF des Intelligenten Netzes INW in diesen Netzknoten integriert wird. Für das Beispiel des GPRS-Dienstes besteht dieser Netzknoten aus dem Dienstenetzknoten SGSN (Serving GPRS Support Node), der in seinem Versorgungsbereich befindliche Kommunikationsendgeräte bedient. Bei den in FIG 1 mit ETE bezeichneten Kommunikationsendgeräten, die zur Paketdatenübertragung an das Paketdatennetz PDN angeschlossen sind, handelt es sich für das obige Beispiel um die von mobilen Teilnehmern benutzten Mobilstationen. Über eine Schnittstelle von der Dienstevermittlungsfunktion SSF zu der Dienstesteuerungsfunktion SCF des Intelligenten Netzes INW tauschen die beiden IN-Funktionalitäten gegenseitig Informationen und Nachrichten aus. Es sei angenommen, dass der Paketdatenstrom von einem Kommunikationsendgerät ETE zu einem anderen Kommunikationsendgerät ETE führt, wobei beide Endgeräte Datenpakete über das Netz PDN senden und empfangen können. Gemäß der Erfindung ist vorgesehen, ein Interworking zwischen dem Paketdatennetz PDN - das als paketorientiertes Transportnetz wirkt - und dem Intelligenten Netz INW durchzuführen, um den Paketdatenstrom durch das Intelligente Netz INW mengenmäßig zu überwachen.

Im Intelligenten Netz INW gibt es einen Mechanismus, der es ermöglicht, bestimmte Ereignisse in einem Basisnetz - im vorliegenden Beispiel in dem Paketdatennetz PDN - zu überwachen. Zu diesem Zweck werden Ereignispunkte (Detection Points) definiert, und das Intelligente Netz INW kann dem Basisnetz mitteilen, welche Ereignispunkte zu überwachen sind. Wenn ein Ereignis eintritt, für welches ein derartiger Ereignispunkt definiert ist, so wird dieses dem Intelligenten Netz INW mitgeteilt. Dies kann als Meldung (notification) oder als Anforderung (request) erfolgen, wobei das Basisnetz weitere Instruktionen erwartet.

Für Paketdatenströme gemäß dem Paketdatendienst wird ein neuer Ereignispunkt definiert, der angibt, ob ein gewisser Schwellwert im bisher übertragenen Paketdatenvolumen zumindest erreicht oder überschritten wurde. Die Dienstesteuerungsfunktion SCF des Intelligenten Netzes INW setzt einen Schwellwert für die Messung der im Paketdatenstrom übertragenen Pakete und übermittelt hinsichtlich des Paketdatendienstes folgende Informationen an den Netzknoten - z.B. SGSN - mit integrierter Dienstevermittlungsfunktion SSF:
- Die Identifikation des Paketdatenstromes in Form der Adresse des Absenders und/oder des Empfängers von Paketen. Dies kann z.B. eine IP-Adresse (Internet Protocol) für den Fall der Paketdatenübertragung über das Internet sein, oder aber auch eine andere Teilnehmeridentifikation, die es dem Paketdatennetz PDN erlaubt, die Pakete eindeutig zuzuordnen. Im Falle des Paketdatendienstes GPRS in einem GSM-Netz besteht die Identifikation aus der internationalen Mobilteilnehmerkennung (IMSI) des mobilen Teilnehmers.
- Die Höhe des Schwellwertes. Wenn die im Paketdatennetz PDN - beispielsweise von dem Netzknoten - gemessene Anzahl der übertragenen Pakete diesen Schwellwert erreicht, so erfolgt eine Nachricht bzw. Meldung an das Intelligente Netz INW.
- Die Eigenschaft der Messung der übertragenen Pakete. Die Messung kann entweder absolut, d.h. seit Beginn der Paketdatenübertragung, oder relativ, d.h. seit dem letzten Überschreiten des eingestellten Schwellwertes, vorgenommen werden.
- Die Eigenschaft des Messwertes. Es kann entweder die Anzahl der Pakete oder die Menge der insgesamt übertragenen Daten gemessen werden (z.B. in Bytes).
- Die geforderte Reaktion des Paketdatennetzes PDN bzw. seines Netzknotens - z.B. SGSN - bei Erreichen oder Überschreiten des Schwellwertes. Dabei ist es möglich, entweder das Überschreiten des Schwellwertes lediglich zu melden oder nach Überschreiten des Schwellwertes keine weitere Paketübertragung mehr zuzulassen.
- Die gewünschte Reaktion des Paketdatennetzes PDN bzw. seines Netzknotens - z.B. SGSN - bei Überschreiten des Schwellwertes in Bezug auf die weitere Messung. Gemäß einer ersten Variante ist die Messung nur einmalig durchzuführen, während bei einer alternativen Variante nach jedem Überschreiten des Schwellwertes die Messung erneut gestartet wird.
- Die Übertragungsrichtung des zu messenden Paketdatenstromes. Die Messung kann entweder nur für die bei dem Teilnehmer bzw. dessen Kommunikationsendgerät ETE ankommenden Pakete oder nur für die von dem Teilnehmer bzw. dessen Kommunikationsendgerät ETE abgehenden Pakete oder für ankommende und abgehende Pakete in beiden Richtungen erfolgen.
- Ein - vorzugsweise von der Dienstevermittlungsfunktion SSF überwachtes - Zeitintervall, innerhalb dessen die Schwellwertüberschreitung festgestellt werden kann. In diesem Fall wird das Zeitintervall der Dienstevermittlungsfunktion SSF beim Setzen des Schwellwertes von der Dienstesteuerungsfunktion SCF mitgeteilt. Nach Ablauf des Zeitintervalls wird die Messung von der Dienstevermittlungsfunktion SSF erneut gestartet. Bei dieser Art der Messung kann das Zeitintervall gemäß einer alternativen Lösung auch von der Dienstesteuerungsfunktion SCF überwacht werden, die eine Zeitmessung nach Aussenden einer Nachricht an die Dienstevermittlungsfunktion SSF neu startet.

Die Dienstesteuerungsfunktion SCF gemäß dem IN-Prinzip weist dazu Mittel, die den Schwellwert setzen und die anderen Informationen bereitstellen und festlegen, sowie Mittel, die diese Informationen an die Dienstevermittlungsfunktion SSF übermitteln, auf. Diese Mittel können übliche Sende/Empfangseinrichtungen und Verarbeitungseinrichtungen wie z.B. Prozessoren sein. Auch in der Dienstevermittlungsfunktion SSF gemäß dem IN-Prinzip sind derartige Verarbeitungs- und Sende/Empfangseinrichtungen für eine Kommunikation mit anderen Funktionen bzw. Netzeinrichtungen und für die Durchführung der Verfahrensschritte gemäß vorliegendem Ausführungsbeispiel vorgesehen.

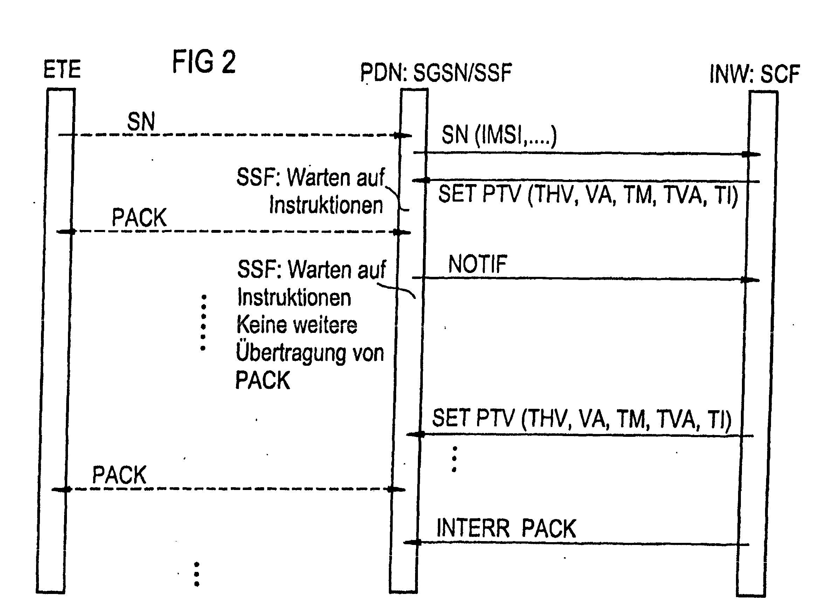

FIG 2 zeigt den Nachrichtenfluß zwischen den Netzeinrichtungen und den Kommunikationsendgeräten zur Überwachung der Paketdatenströme. Zunächst wird eine Anfangsnachricht SN von dem Kommunikationsendgerät ETE erzeugt und - über nicht dargestellte Netzeinrichtungen - zu der in dem Netzknoten SGSN integrierten Dienstevermittlungsfunktion SSF geleitet und von dort zwischen der Dienstevermittlungsfunktion SSF und der Dienstesteuerungsfunktion SCF im Intelligenten Netz INW gesendet. Die Anfangsnachricht SN kann eine Signalisierungsnachricht sein, mit der eine Paketübertragung eingeleitet wird - beispielsweise bei dem Paketdatendienst GPRS die Aktivierung eines Paketdatenprotokolls. Sie kann aber auch bereits Teil einer ersten Paketübertragung sein. Das Setzen eines Schwellwertes im nachfolgenden Schritt kann unabhängig von der Anfangsnachricht SN erfolgen. Ebenso kann auf eine Anfangsnachricht an das Intelligente Netz INW verzichtet werden, nämlich dann, wenn die Dienstesteuerungsfunktion SCF bereits vorab einen Schwellwert gesetzt hat. Die Anfangsnachricht SN an die Dienstesteuerungsfunktion SCF enthält neben anderen Informationen eine Teilnehmeridentifikation, die es dem Paketdatennetz PDN erlaubt, die Pakete eindeutig zuzuordnen. Im Falle des Paketdatendienstes GPRS in einem GSM-Netz besteht die Identifikation aus der internationalen Mobilteilnehmerkennung IMSI des mobilen Teilnehmers.

Die Dienstesteuerungsfunktion SCF setzt einen Paketschwellwert THV (threshold value). Darüber hinaus legt sie vorzugsweise einen oder mehrere Parameter - wie z.B. die Höhe VA (value) des Schwellwerts, die Eigenschaft TVA (type of value) des Schwellwerts als Messwert, die Eigenschaft TM (type of measurement) der Messung und ein Zeitintervall TI (time interval), innerhalb dessen das Erreichen bzw. Überschreiten des Schwellwerts festgestellt werden kann - fest. In einer Nachricht SET PTV (setup package threshold value) teilt sie den Schwellwert THV und ggf. die zusätzlichen Parameter VA, TVA, TM der Dienstevermittlungsfunktion SSF mit. Die Dienstevermittlungsfunktion SSF wartet auf Instruktionen - und kann ggf. eintreffende Pakete verwerfen oder anstauen, solange noch kein Schwellwert gesetzt wurde - oder mit dem Pakettransfer die Behandlung des Dienstes unmittelbar fortsetzen.

Zwischen dem Kommunikationsendgerät ETE und der Dienstevermittlungsfunktion SSF erfolgt die Übertragung der Pakete PACK (packets). Sobald die Dienstevermittlungsfunktion SSF ein Erreichen oder eine Überschreitung des eingestellten Schwellwerts THV ermittelt hat, meldet sie dies der Dienstesteuerungsfunktion SCF durch Aussenden einer Nachricht NOTIF (notification). Die weitere Übertragung von Paketen PACK wird unterbrochen. Abhängig von der Art der Messung wartet die Dienstevermittlungsfunktion SSF auf Instruktionen. Setzt die Dienstesteuerungsfunktion SCF erneut einen Paketschwellwert - durch Aussenden einer weiteren Nachricht SET PTV mit zumindest dem Schwellwert THV, ergänzt ggf. durch einen oder mehrere der Parameter VA, TVA, TM - , wird der Paketdatenstrom mit den Paketübertragungen zwischen Kommunikationsendgerät ETE und Dienstevermittlungsfunktion SSF wieder aufgenommen. Diese Prozedur kann sich mehrfach wiederholen, bis zuletzt die Paketdatenübertragung endgültig von der Dienstesteuerungsfunktion SCF beendet wird, indem sie eine Unterbrechungsnachricht INTERR PACK (interruption of packet transmission) an die Dienstevermittlungsfunktion SSF aussendet.

Der obige Mechanismus kann zu einer Online-Vergebührung von Paketdatendiensten folgendermaßen genutzt werden. Im GPRS-Netz wird eine Paketdatenübertragung durch den Benutzer mittels mobilem Endgerät angefordert. Hierzu wird ein Paketdatenprotokoll aktiviert. Bei dieser Aktivierung wird das Intelligente Netz eingeschaltet, welches zunächst entscheidet, ob der Benutzer zur Nutzung des Paketdatenprotokolls mit der geforderten Dienstequalität (Quality of Service) berechtigt ist, und ob eine ausreichende Kontodeckung zur Nutzung des Dienstes vorhanden ist. Falls ja, wird die Aktivierung gestattet und ein erster Schwellwert zur Überwachung des Paketdatenstromes gesetzt. Daraufhin beginnt im Basisnetz die Übertragung. Sobald der Schwellwert erreicht ist, sendet das Basisnetz eine Meldung an das Intelligente Netz. Dieses bestimmt die angefallenen Gebühren abhängig vom Volumen, dem zur Zeit gültigen Tarif, der Dienstequalität (Quality of Service) etc. Der angefallene Betrag wird sodann vom Konto abgezogen. Falls das Konto nach wie vor genügend Deckung aufweist, wird der Schwellwert erneut gesetzt, andernfalls wird das Basisnetz angewiesen, keine weiteren Paketübertragungen mehr zuzulassen. Das Verfahren kann auch zu einer Überwachung der einzelnen Paketdatenströme genutzt werden, um z.B. zu erkennen und zu verhindern, daß einzelne Benutzer das Netz übermäßig oder über ihre Berechtigung hinausgehend überlasten.

## Patentansprüche

1. Verfahren zur Behandlung eines Paketdatendienstes durch zumindest einen Dienstenetzknoten (SGSN) eines Paketdatennetzes (PDN), mit dem Kommunikationsendgeräte (ETE) zur Übertragung von Paketdaten verbunden sind,
**dadurch gekennzeichnet,**
- **dass** ein Interworking des Paketdatendienstes mit Netzfunktionen eines Intelligenten Netzes (INW) erfolgt, von denen eine Dienstevermittlungsfunktion (SSF) mit dem Dienstenetzknoten (SGSN) zusammengeschaltet und eine Dienstesteuerungsfunktion (SCF) **des intelligenten Netzes (IWN)** an den Dienstenetzknoten (SGSN) mit integrierter Dienstevermittlungsfunktion (SSF) angeschaltet wird, und
- **dass** zur Überwachung eines Paketdatenstromes im Paketdatennetz (PDN) zumindest ein Schwellwert (THV) für die Paketdatenübertragung von der Dienstesteuerungsfunktion (SCF) gesetzt und der Dienstevermittlungsfunktion (SSF) übermittelt wird, **und.**
**dass von der Dienstevermittlungsfunktion (SSF) eine Messung *des Paketdatenstromes* durchgeführt und bei Erreichen des Schwellwerts (THV) eine Meldung an die Dienstesteuerungsfunktion (SCF) gesendet wird.**

2. Verfahren nach Anspruch 1,
**dadurch gekennzeichnet,**
**dass** bei Erreichen des Schwellwerts (THV) **der Messung** eine weitere Übertragung von Paketen im Paketdatenstrom gestoppt wird.

3. Verfahren nach einem der vorhergehenden Ansprüche,
**dadurch gekennzeichnet,**
**dass** zusammen mit dem Schwellwert (THV) ein oder mehrere Parameter (VA, TM, TVA) hinsichtlich des Schwellwerts und/oder der Messung der Anzahl der übertragenen Pakete oder der insgesamt übertragene Datenmenge gesendet werden.

4. Verfahren nach Anspruch 3,
**dadurch gekennzeichnet,**
**dass** ein Parameter (VA) die Höhe des Schwellwerts (THV) angibt.

5. Verfahren nach Anspruch 3,
**dadurch gekennzeichnet,**
**dass** ein Parameter (TM) **eine** Eigenschaft der Messung angibt, ob sie von Beginn der Paketdatenübertragung an oder seit dem letzten Erreichen des Schwellwerts (THV) einsetzt.

6. Verfahren nach Anspruch 3,
**dadurch gekennzeichnet,**
**dass** ein Parameter (TVA) **eine** Eigenschaft des Schwellwerts als Messwert angibt, **nämlich** ob die Anzahl der übertragenen Pakete oder die insgesamt übertragene Datenmenge gemessen wird.

7. Verfahren nach Anspruch 3,
**dadurch gekennzeichnet,**
**dass** ein Parameter (TI) **ein** Zeitintervall angibt, innerhalb dessen die Messung der Anzahl der übertragenen Pakete oder der insgesamt übertragene Datenmenge erfolgt.

8. Verfahren nach Anspruch 7,
**dadurch gekennzeichnet,**
**dass** von der Dienstevermittlungsfunktion (SSF) das Zeitintervall überwacht wird und dass die Messung nach Ablauf des Zeitintervalls erneut begonnen sowie das Zeitintervall gestartet wird.

9. Verfahren nach Anspruch 7,
**dadurch gekennzeichnet,**
**dass** von der Dienstesteuerungsfunktion (SCF) das Zeitintervall überwacht wird.

10. Verfahren nach einem der vorhergehenden Ansprüche,
**dadurch gekennzeichnet,**
**dass** die Überwachung des Paketdatenstromes durch Setzen des Schwellwerts (THV) einmalig oder mehrmals durchgeführt wird.

11. Verfahren nach Anspruch 10,
**dadurch gekennzeichnet,**
**dass** nach jedem Erreichen des Schwellwerts (THV) die Überwachung erneut gestartet wird.

12. Verfahren nach einem der Ansprüche 3-11,
**dadurch gekennzeichnet,**
**dass** die Dienstevermittlungsfunktion (SSF) nach **der** Meldung über das Erreichen des Schwellwerts (THV) auf Instruktionen der Dienstesteuerungsfunktion (SSF) wartet, bevor sie die Paketdatenübertragung fortsetzt oder abbricht.

13. Anordnung zur Behandlung eines Paketdatendienstes durch zumindest einen Dienstenetzknoten (SGSN) eines Paketdatennetzes (PDN), mit dem Kommunikationsendgeräte (ETE) zur Übertragung von Paketdaten verbunden sind,
**dadurch gekennzeichnet,**
- **dass** zum Interworking des Paketdatendienstes mit Netzfunktionen eines Intelligenten Netzes (INW) eine Dienstevermittlungsfunktion (SSF) mit dem Dienstenetzknoten (SGSN) zusammengeschaltet und eine Dienstesteuerungsfunktion (SCF) an den Dienstenetzknoten (SGSN) mit integrierter Dienstevermittlungsfunktion (SSF) angeschaltet ist,
- **dass** die Dienstesteuerungsfunktion (SCF) Mittel zum Setzen zumindest eines Schwellwerts (THV) für die Überwachung eines Paketdatenstromes im Paketdatennetz (PDN) und Mittel zur Übermittlung des Schwellwerts (THV) an die Dienstevermittlungsfunktion (SSF) aufweist, **und**
**dass Mittel in der Dienstevermittlungsfunktion (SSF) zur Messung der Anzahl der übertragenen Pakete oder der insgesamt** **übertragenen Datenmenge und zum Senden einer Meldung an die Dienstesteuerungsfunktion (SCF) bei Erreichen des Schwellwerts (THV) vorgesehen sind.**

## Claims

1. Method for handling a packet data service with at least one service GPRS support node (SGSN) of a packet data network (PDN), in which communication terminals (ETE) are connected for transmitting packet data, **characterized in that**
- interworking between the packet data service and network functions of an intelligent network (INW) is effected, of which functions a service switching function (SSF) is connected together with the service GPRS support node (SGSN) and a service control function (SCF) of the intelligent network (INW) is connected to the service GPRS support node (SGSN) with integrated service switching function (SSF), and
- for monitoring a packet data stream in the packet data network (PDN), at least one threshold value (THV) is set by the service control function (SCF) for the packet data transmission and is transmitted to the service switching function (SSF), and that the service switching function (SSF) performs a measurement of the packet data stream and, when the threshold value (THV) is reached, a message is sent to the service control function (SCF).

2. Method according to Claim 1, **characterized in that** when the threshold value (THV) of the measurement is reached, further transmission of packets in the packet data stream is stopped.

3. Method according to one of the preceding claims, **characterized in that**, together with the threshold value (THV), one or more parameters (VA, TM, TVA) with respect to the threshold value and/or the measurement of the number of transmitted packets and the total volume of data transmitted are sent.

4. Method according to Claim 3, **characterized in that** one parameter (VA) specifies the magnitude of the threshold value (THV).

5. Method according to Claim 3, **characterized in that** one parameter (TM) specifies one characteristic of the measurement whether it starts from the beginning of the packet data transmission or since the threshold value (THV) has last been reached.

6. Method according to Claim 3, **characterized in that** one parameter (TVA) specifies one characteristic of the threshold value as measurement value, namely whether the number of transmitted packets or the total volume of data transmitted is measured.

7. Method according to Claim 3, **characterized in that** one parameter (TI) specifies a time interval within which the number of transmitted packets or the total volume of data transmitted is measured.

8. Method according to Claim 7, **characterized in that** the service switching function (SSF) monitors the time interval and that the measurement is restarted after the time interval has elapsed and the time interval is started.

9. Method according to Claim 7, **characterized in that** the service control function (SCF) monitors the time interval.

10. Method according to one of the preceding claims, **characterized in that** the monitoring of the packet data stream is performed once or several times by setting the threshold value (THV).

11. Method according to Claim 10, **characterized in that** the monitoring is restarted after every time the threshold value (THV) has been reached.

12. Method according to one of Claims 3-11, **characterized in that**, after the message about the threshold value (THV) has been reached, the service switching function (SSF) waits for instructions from the service control function (SCF) before it continues or aborts the packet data transmission.

13. Arrangement for handling a packet data service with at least one service GPRS support node (SGSN) of a packet data network (PDN) to which communication terminals (ETE) are connected for transmitting packet data, **characterized in that**
- to effect the interworking of the packet data service with network function of an intelligent network (INW), a service switching function (SSF) is connected together with the service GPRS support node (SGSN) and a service control function (SCF) is connected to the service GPRS support node (SGSN) with integrated service switching function (SSF),
- that the service control function (SCF) exhibits means for setting at least one threshold value (THV) for monitoring a packet data stream in the packet data network (PDN), means for transmitting the threshold value (THV) to the service switching function (SSF), and
that means are provided in the service switching function (SSF) for measuring the number of transmitted packets or the total volume of data transmitted and for sending a message to the service control function (SCF) when the threshold value (THV) is reached.

## Revendications

1. Procédé de traitement d'un service de données en paquets par au moins un noeud (SGSN) de réseau de service d'un réseau (PDN) de données en paquets, auquel des terminaux (ETE) de communications sont reliés en vue de la transmission de données en paquets,
**caractérisé**
- **en ce qu'**il s'effectue un Interworking du service de données en paquets par des fonctions de réseau d'un réseau (INW) intelligent, dont une fonction (SSF) de commutation de service est interconnectée au noeud (SGSN) de réseau de services et une fonction (SCF) de commande de services du réseau (INW) intelligent est raccordée au noeud (SGSN) du réseau de services par une fonction (SSF) de commutation de service intégrée, et
- **en ce que**, pour surveiller un courant de données en paquets dans le réseau (PDN) de données en paquets, au moins une valeur (THV) seuil pour la transmission de données en paquets par la fonction (SCF) de commande de service est établie et est transmise à la fonction (SSF) de commutation de service, et
**en ce que**, par la fonction (SSF) de commutation de service, une mesure du courant de données en paquets est effectuée et, lorsque la valeur (THV) seuil est atteinte, il est envoyé un message à la fonction (SCF) de commande de service.

2. Procédé suivant la revendication 1, **caractérisé en ce que**, lorsque la valeur (THV) seuil de la mesure est atteinte, une continuation de la transmission de paquets dans le courant de données en paquets est arrêtée.

3. Procédé suivant l'une des revendications précédentes, **caractérisé en ce qu'**il est émis conjointement avec la valeur (THV) seuil un ou plusieurs paramètres (VA, TM, TVA) relatifs à la valeur seuil et/ou à la mesure du nombre des paquets transmis ou de la quantité de données transmise en tout.

4. Procédé suivant la revendication 3, **caractérisé en ce qu'**un paramètre (VA) indique le niveau de la valeur (THV) seuil.

5. Procédé suivant la revendication 3, **caractérisé en ce qu'**un paramètre (TM) indique une qualité de la mesure, à savoir si elle est effectuée depuis le début de la transmission de données par paquets ou depuis la dernière fois que la valeur (THV) seuil a été atteinte.

6. Procédé suivant la revendication 3, **caractérisé en ce qu'**un paramètre (TVA) indique une qualité de la valeur seuil comme valeur de mesure, à savoir s'il est mesuré le nombre des paquets transmis ou la quantité de données transmises en tout.

7. Procédé suivant la revendication 3, **caractérisé en ce qu'**un paramètre (TI) indique un intervalle de temps pendant lequel la mesure du nombre des paquets transmis ou de la quantité des données transmises en tout s'effectue.

8. Procédé suivant la revendication 7, **caractérisé en ce que** l'intervalle de temps est surveillé par la fonction (SSF) de commutation de service et **en ce que** la mesure est recommencée après écoulement de l'intervalle de temps et que l'intervalle de temps est repris à zéro.

9. Procédé suivant la revendication 7, **caractérisé en ce que** l'intervalle de temps est surveillé par la fonction (SCF) de commande de service.

10. Procédé suivant l'une des revendications précédentes, **caractérisé en ce que** la surveillance du courant de données en paquets par l'établissement de la valeur (THV) seuil s'effectue une seule fois ou plusieurs fois.

11. Procédé suivant la revendication 10, **caractérisé en ce que** la surveillance est recommencée chaque fois que la valeur (THV) seuil est atteinte.

12. Procédé suivant l'une des revendications 3 à 11, **caractérisé en ce que** la fonction (SSF) de commutation de service attend après la signalisation concernant l'atteinte de la valeur (THV) seuil des instructions de la fonction (SSF) de commande de service avant de poursuivre ou d'interrompre la transmission de données en paquets.

13. Dispositif pour traiter un service de données en paquets par au moins un noeud (SGSN) de réseau de service d'un réseau (PDN) de données en paquets, auquel des terminaux (ETE) de communications sont reliés pour la transmission de données en paquets,
**caractérisé**
- **en ce que**, pour l'Interworking du service de données en paquets avec des fonctions de réseau d'un réseau (INW) intelligent, une fonction (SSF) de commutation de service est interconnectée au noeud (SGSN) de réseau de services et une fonction (SCF) de commande de services est raccordée au noeud (SGSN) de réseau de services par une fonction (SSF) de commutation de service intégrée, et
- **en ce que** la fonction (SCF) de commande de service comporte des moyens pour établir au moins une valeur (THV) seuil pour la surveillance d'un courant de données en paquets dans le réseau (PDN) de données en paquets et des moyens pour transmettre la valeur (THV) seuil à la fonction (SSF) de commutation de service, et
**en ce qu'**il est prévu des moyens dans la fonction (SSF) de commutation de service pour mesurer le nombre des paquets transmis ou la quantité de données transmises en tout et pour émettre une signalisation adressée à la fonction (SCF) de commande de service dans le cas où la valeur (THV) seuil est atteinte.
